# EUROPÄISCHE PATENTSCHRIFT

(11) **EP 3 080 674 B1**
(45) Veröffentlichungstag und Bekanntmachung des Hinweises auf die Patenterteilung: **12.02.2020**
(21) Anmeldenummer: 14835615.7
(22) Anmeldetag: 05.12.2014
(51) Int. Cl.: G01F 1/28, A62C 5/02

(54) **DURCHFLUSSMENGENMESSEINRICHTUNG FÜR EINE FEUERLÖSCHVORRICHTUNG**
FLOW RATE MEASUREMENT DEVICE FOR A FIRE EXTINGUISHING APPARATUS
DÉBITMÈTRE DESTINÉ À UN SYSTÈME D'EXTINCTEUR

(30) Priorität: 09.12.2013 AT 508092013
(43) Veröffentlichungstag der Anmeldung: 19.10.2016
(73) Patentinhaber: Rosenbauer International AG, 4060 Leonding (AT)
(72) Erfinder: HAMMER, Hannes, A-4223 Katsdorf (AT)
(74) Vertreter: Burger, Hannes
(86) Internationale Anmeldenummer: PCT/AT2014/050296
(87) Internationale Veröffentlichungsnummer: WO 2015/085339

(56) Entgegenhaltungen:
- EP-A2- 1 655 059
- US-A- 4 224 956
- US-A- 4 417 601
- US-A1- 2004 084 192

## Beschreibung

Die Erfindung betrifft eine Durchflussmengenmesseinrichtung für eine Feuerlöschvorrichtung, sowie eine mit dieser Durchflussmengenmesseinrichtung ausgestattete Feuerlöschvorrichtung wie dies in den Ansprüchen 1 und 15 angegeben ist.

Aus dem Stand der Technik ist eine Durchflussmengenmesseinrichtung bekannt, welcher wie folgt funktioniert. Während des Strömungsvorganges von Löschmittel in Richtung Löschmittelableitung passiert das Löschmittel ein Steuerelement. Das Steuerelement ist ein stumpfkegelig ausgeführtes Element, welches an einem als zylindrische Bohrung ausgeführten Steuerelementsitz anliegt. Zur Führung des Steuerelementes ist dieses fest mit einer Steuerstange verbunden. Durch ein Federelement wird das Steuerelement auf den Steuerelementsitz gedrückt, sodass sich eine Kontaktfläche zwischen Steuerelement und Steuerelementsitz ergibt. Diese Kontaktfläche ist vorzugsweise vollumfänglich mit gleicher Querschnittsfläche ausgebildet. Durch das Steuerelement wird der Druckabgang zur Löschmittelableitung separiert. Wird nun Löschmittel gefördert, so erhöht sich der Druck an der spitzen Seite des Steuerelementes. Durch diesen erhöhten Druck gegenüber der Löschmittelableitung wird das Steuerelement vom durchströmenden Löschmittel in Richtung Strömungsrichtung bewegt. Hierbei wird das Steuerelement von seinem Steuerelementsitz abgehoben, sodass sich ein ringförmiger Querschnitt ergibt, durch welchen ringförmigen Querschnitt das Löschmittel in Richtung Löschmittelableitung fließen kann. Bei einer Erhöhung des Löschmittelvolumenstromes wird das Steuerelement direkt proportional entsprechend der Durchströmfläche durch den ringförmigen Querschnitt immer mehr in Richtung der Strömungsrichtung gedrückt, wodurch auch die Steuerstange weiter in Richtung Strömungsrichtung bewegt wird. Bei Verringerung des Volumenstromes wird das Steuerelement vom Federelement entgegen der Strömungsrichtung in Richtung zum Steuerelementsitz zurückgedrückt, sodass der wasserdurchflossene ringförmige Querschnitt verkleinert wird. Das Steuerelement, beziehungsweise die damit verbundene Steuerstange, dient dazu eine Zusatzmitteldosiereinrichtung zu regeln. Weiters kann auch vorgesehen sein, dass mit dem Steuerelement nur die Durchflussmenge gemessen und elektronisch abgegriffen wird. Durch diesen Zusammenhang kann Zusatzmittel so zur Löschmittelmenge zudosiert werden, dass der prozentuelle Zusatzmittelanteil im Löschmittel auch bei Variation der Durchflussmenge des Löschmittels immer gleich bleibt.

Die aus dem Stand der Technik bekannte Ausführung besitzt den Nachteil, dass bezogen auf die maximale Durchflussmenge durch den Steuerkegel, in einem Bereich mit geringer Durchflussmenge, zum Beispiel eine Verdopplung der Durchflussmenge nur einen geringen Steuerkegelausschlag und damit Steuerstangenausschlag hervorruft. Dies ist besonders nachteilig, da die Dosiervorrichtung, um den Zusatzmittelanteil im Löschmittel konstant zu halten, die Zusatzmittelmenge verdoppeln muss, und somit sehr genau einstellbar sein muss.

Die US 4 417 601 A offenbart ein Proportionierventil zum aktiven Einstellen einer Durchflussmenge. Das Proportionierventil weist einen Ventilkörper mit einer Einlassöffnung und einer Auslassöffnung auf. Im Ventilkörper ist ein Stößel angeordnet, welcher zum Verschließen der Einlassöffnung ausgebildet ist. Der Stößel ist über ein Stellgewinde mit einem Drehknopf verbunden, mittels welchem die Durchflussmenge eingestellt werden kann. Mit dem Proportionierventil kann aktiv die Durchflussmenge eingestellt werden.

Der vorliegenden Erfindung liegt die Aufgabe zugrunde eine verbesserte Durchflussmengenmesseinrichtung zu schaffen.

Diese Aufgabe der Erfindung wird durch die Maßnahmen gemäß Anspruch 1 gelöst.

Erfindungsgemäß ist eine Durchflussmengenmesseinrichtung für eine Feuerlöschvorrichtung zum Erfassen der Durchflussmenge an Löschmittel oder Frischwasser ausgebildet. Die Durchflussmengenmesseinrichtung umfasst ein auf einer Steuerstange angeordnetes Steuerelement, welches Steuerelement einen im Wesentlichen kegelförmigen Abschnitt aufweist, und ein das Steuerelement umgebendes Gehäuse, welches Gehäuse zumindest in einem Kontaktabschnitt mit dem Steuerelement einen hohlzylindrischen Steuerelementsitz aufweist, wobei das Steuerelement in Achsrichtung der Steuerstange verschiebbar im Gehäuse aufgenommen ist, wobei die Stellung des Steuerelementes wesentlich davon abhängig ist, wie viel Löschmittel durch die Durchflussmengenmesseinrichtung strömt. Das Steuerelement weist weiters einen zylinderförmigen Teilabschnitt auf, welcher in Strömungsrichtung des zu messenden Fluids gesehen dem kegelförmigen Abschnitt nachgeordnet ist, und welcher zylinderförmige Teilabschnitt in seiner Querschnittskontur an den hohlzylindrischen Steuerelementsitz angepasst ist, sodass der zylinderförmige Teilabschnitt des Steuerelements im Wesentlichen spaltfrei in den hohlzylindrischen Steuerelementsitz einschiebbar ist. Darüber hinaus ist im zylinderförmigen Teilabschnitt des Steuerelements zumindest eine Ausnehmung vorgesehen, welche die Mantelflächen des kegelförmigen Abschnittes und des zylindrischen Teilabschnittes des Steuerelements unterbricht.

Ein Vorteil der erfindungsgemäßen Ausbildung liegt darin, dass durch die spezielle Geometrie des Steuerelementes, der Steuerausschlag bei Änderung der Durchflussmenge an Löschmittel an die Erfordernisse einer Zusatzmitteldosiervorrichtung angepasst werden kann. Durch den Einsatz eines erfindungsgemäßen Steuerelementes kann erreicht werden, dass bei einer, im Vergleich zur maximal messbaren Durchflussmenge, geringen Durchflussmenge (beispielsweise 5% der max. Durchflussmenge), eine Veränderung der Durchflussmenge in einen ausreichenden Steuerausschlag umgewandelt wird. Dies wird Besonders durch die Ausnehmungen, welche im zylinderförmigen Teilabschnitt des Steuerelementes angeordnet sind erreicht. Bei einer geringen Durchflussmenge an Löschmittel, strömt dieses nur durch die seitlich angebrachten Ausnehmungen. Verändert sich nun die Durchflussmenge an Löschmittel, so führt dies zu einem ausreichenden Steuerausschlag, da die Ausnehmungen nur einen Bruchteil des Umfanges des Steuerelementes ausbilden. Bei einer erhöhten Durchflussmenge, welche so groß ist, dass der zylinderförmige Abschnitt des Steuerelementes komplett aus dem Steuerelementsitz gehoben ist, und die gesamte Umfangskontur des Steuerelementes durchströmt wird, führt eine Veränderung der Durchflussmenge zu einem vergleichsweise geringen Steuerausschlag, wodurch auch große Durchflussmengen noch gut bestimmt werden können. Zusammengefasst ergibt sich daraus der Vorteil dass eine Kurve des Zusammenhangs zwischen Durchflussmenge und Steuerausschlag zumindest zwei unterschiedliche Steigungen aufweisen kann.

Ferner kann vorgesehen sein, dass die zumindest eine Ausnehmung als eine zur Achsrichtung der Steuerstange parallel verlaufende Tasche ausgeführt ist. Vorteilhaft ist hierbei, dass eine derartige Tasche gut herzustellen ist, und weiters eine optimale Geometrie aufweist, um die gewünschte Funktionalität zu erfüllen.

Weiters kann es zweckmäßig sein, dass zumindest zwei diametral gegenüberliegende Ausnehmungen vorgesehen sind. Hierbei ist von Vorteil, dass bei einer diametralen Anordnung gute Strömungsverhältnisse in der Durchflussmengenmesseinrichtung erreicht werden. Weiters kann dadurch erreicht werden, dass die am Steuerelement auftretenden Kräfte einigermaßen symmetrisch ausfallen.

Darüber hinaus kann vorgesehen sein, dass der zylinderförmige Teilabschnitt direkt an den kegelförmigen Abschnitt anschließt. Dies bringt den Vorteil mit sich, dass die Geometrie möglichst einfach gestaltet werden kann, wodurch der Fertigungsaufwand minimiert werden kann.

Ferner kann es zweckmäßig sein, dass am Steuerelement anschließend an den zylinderförmigen Teilabschnitt ein Kopfabschnitt in Form einer Erweiterung ausgebildet ist, durch welchen Kopfabschnitt die Einschiebbarkeit des Steuerelements in den Steuerelementsitz begrenzt ist. Von Vorteil ist, dass das Steuerelement von einem Federelement an den Steuerelementsitz gedrückt werden kann, und der Kopfabschnitt dabei als Anschlag dient.

Weiters kann vorgesehen sein, dass dass die Längsausdehnung des zylinderförmigen Teilabschnittes des Steuerelements zwischen 5% und 20% der Querausdehnung des zylinderförmigen Teilabschnittes des Steuerelements beträgt. Vorteilhaft ist hierbei, dass mit diesem Wertebereich ein erwünschtes Verhältnis zwischen hohem Steuerausschlag bei Änderung einer geringen Durchflussmenge und vergleichsweise geringem Steuerausschlag bei Änderung einer hohen Durchflussmenge erreicht werden kann.

Vorteilhaft ist auch eine Ausprägung, gemäß welcher die Längsausdehnung des kegelförmigen Abschnittes des Steuerelements zwischen 100% und 200% der Längsausdehnung des zylinderförmigen Teilabschnittes beträgt. Von besonderem Nutzen ist hierbei, dass der kegelförmige Abschnitt dafür sorgt, dass die Umströmung des Steuerelementes positiv beeinflusst wird. Besonders im genannten Wertebereich weist der kegelförmige Abschnitt des Steuerelementes eine vorteilhafte Form auf, um dies zu gewährleisten.

Weiters kann vorgesehen sein, dass das Steuerelement mittels einem Befestigungselement mit der Steuerstange verbunden ist. Hierdurch kann erreicht werden, dass das Steuerelement leicht von der Steuerstange getrennt werden kann, was eine Wartung der Durchflussmengenmesseinrichtung erleichtert.

Ferner kann es zweckmäßig sein, dass der Öffnungswinkel des kegelförmigen Abschnittes zwischen 70° und 130° beträgt. Hierdurch können gute Strömungsverhältnisse in der Umströmung des Steuerelementes erreicht werden.

Darüber hinaus kann es zweckmäßig sein, dass die Ausnehmungen zwischen 5% und 60% der abgewickelten Länge des zylindrischen Teilabschnittes am Steuerelement einnehmen. Dadurch kann das Steuerverhalten des Steuerelementes positiv beeinflusst, beziehungsweise entsprechend den Anforderungen umgesetzt werden. Die Abgewickelte Länge ist gleich zu setzen mit dem Umfang des zylindrischen Teilabschnittes. Die Ausnehmungen sind jener Teil des Umfanges, welcher unterbrochen ist.

Entsprechend einer vorteilhaften Weiterbildung kann vorgesehen sein, dass eine axiale Erstreckung einer Ausnehmung im zylindrischen Teilabschnitt in etwa gleich groß ist wie eine radiale Erstreckung dieser Ausnehmung. Dies hat den Vorteil, dass die vom Löschmittel durchströmte axiale Eintrittsfläche der Ausnehmung in etwa gleich groß ist, wie die radiale Austrittsfläche. Dadurch kann erreicht werden, dass die Strömungsgeschwindigkeit am Eintritt der Ausnehmung in etwa gleich groß ist, wie die Strömungsgeschwindigkeit am Austritt der Ausnehmung.

Außerdem kann vorgesehen sein, dass die wenigstens eine Ausnehmung einen Verbindungskanal zwischen dem kegelförmigen Abschnitt und dem zylindrischen Teilabschnitt des Steuerelements ausbildet. Vorteilhaft ist hierbei, dass ein derartiger Verbindungskanal zur Durchströmung des Löschmittels dienen kann.

Weiters kann es zweckmäßig sein, dass der Verbindungskanal radial auf die von der Steuerstange abgewendete Seite offen ausgebildet ist. Vorteilhaft ist hierbei, dass ein derartiger Verbindungskanal einfach herzustellen ist, da er beispielsweise mit einem Fingerfräser erzeugt werden kann.

Schließlich kann vorgesehen sein, dass die wenigstens eine Ausnehmung einen Verbindungskanal ausbildet, welcher radial und axial zum Steuerelement verlaufende Abschnitte aufweist.

In diesem Dokument wird der Begriff Löschmittel sowohl für mit Zusatzmittel vermischtes Frischwasser oder Brauchwasser, als auch unbehandeltes Frischwasser oder Brauchwasser verwendet. Der Grund dafür liegt darin, dass es für die Funktion der Durchflussmengenmesseinrichtung nicht wesentlich ist, ob der Volumenstrom von mit Zusatzmittel unvermischtem oder von mit Zusatzmittel vermischtem Wasser gemessen wird. Einzig wichtig ist hierbei, dass der Zusammenhang zwischen Durchflussmenge und Steuerausschlag des Steuerelementes an die Regulierung der Dosiervorrichtung angepasst ist, sodass ein prozentueller Anteil an Zusatzmittel zum Frisch- oder Brauchwasser hinzugemischt werden kann, wobei dieser prozentuelle Anteil bei verschiedenen Durchflussmengen an Löschmittel immer gleich groß bleiben soll.

Zum besseren Verständnis der Erfindung wird diese anhand der nachfolgenden Figuren näher erläutert.

Es zeigen jeweils in stark vereinfachter, schematischer Darstellung:
- Fig. 1: einen Vertikalschnitt durch eine Pumpe und eine Vormischvorrichtung einer Feuerlöschvorrichtung;
- Fig. 2: eine perspektivische Ansicht von schräg unten auf ein Steuerelement;
- Fig. 3: eine perspektivische Ansicht von schräg oben auf ein Steuerelement;
- Fig. 4: eine Ansicht von unten auf ein Steuerelement;
- Fig. 5: einen Vertikalschnitt durch ein Steuerelement, insbesondere gemäß der Schnittlinie V-V in Fig. 4;
- Fig. 6: eine perspektivische Ansicht eines Zusammenbaues von Gehäuse und darin aufgenommenem Steuerelement, wobei sich das Steuerelement in einer geringen Offenstellung befindet;
- Fig. 7: eine perspektivische Ansicht eines Zusammenbaues von Gehäuse und darin aufgenommenem Steuerelement, wobei sich das Steuerelement in einer weiten Offenstellung befindet;
- Fig. 8: eine Darstellung des Zusammenhanges zwischen Durchflussmenge und Hub für eine exemplarische Baugröße eines beschriebenen Steuerelementes.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

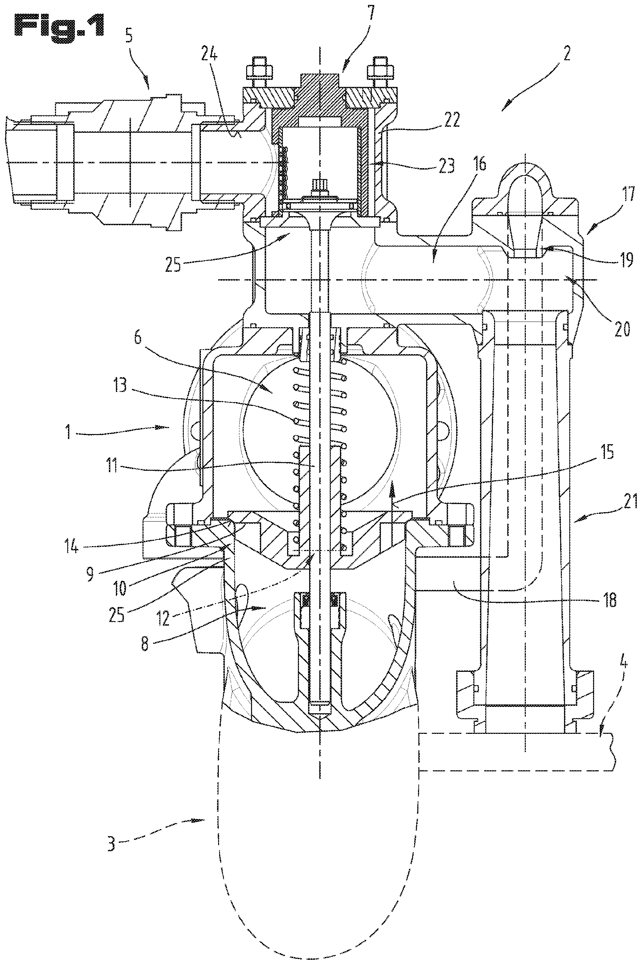

In den Fig. 1 bis Fig. 7 ist eine Durchflussmengenmesseinrichtung 1, sowie wesentliche Bestandteile einer mit dieser Durchflussmengenmesseinrichtung 1 ausgestatteten Feuerlöschvorrichtung 2 in diversen Ansichten und Schnitten dargestellt.

Fig. 1 zeigt einen Schnitt durch eine Durchflussmengenmesseinrichtung 1, welche hinsichtlich ihres Aufbaus und ihrer Funktionsweise in weiterer Folge noch genauer beschrieben wird. Die Durchflussmengenmesseinrichtung 1 ist in ein Vormischsystem integriert, welches Bestandteil einer Feuerlöschvorrichtung 2 ist. Die Feuerlöschvorrichtung 2 umfasst weiters eine Pumpe 3, welche in dieser Schnittdarstellung aus Übersichtlichkeitsgründen abschnittsweise nur schematisch dargestellt ist, eine schematisch dargestellte Wasserzuleitung 4, eine Zusatzmittelzuleitung 5, eine Löschmittelableitung 6 und eine Dosiervorrichtung 7.

Die Feuerlöschvorrichtung 2 dient im Wesentlichen dazu, Frischwasser oder Brauchwasser auf ein höheres Druckniveau zu bringen und gleichzeitig mit einem Zusatzmittel zu versetzen. Typischerweise ist dieses Zusatzmittel durch ein Schaummittel gebildet, mit welchem sogenannter Löschschaum erzeugt werden kann. Dabei wird in der Wasserzuleitung 4 Frischwasser oder Brauchwasser mit einem Zusatzmittel versetzt und im Saugstutzen einer Pumpe 3 angesaugt. Prinzipiell ist hierbei die Art der Pumpe 3, welche verwendet wird, nicht ausschlaggebend für eine Erfüllung der Anforderungen an eine Feuerlöschvorrichtung 2. In der Praxis hat sich jedoch gezeigt, dass eine Kreiselpumpe am besten geeignet ist, um pumpenausgangsseitig ein entsprechendes Druckniveau zu erreichen bzw. um das Medium zu fördern.

Nachdem nun der Druck des Löschmittels mittels der Pumpe 3 auf das gewünschte Druckniveau gebracht wurde, gelangt es in den Druckabgang 8 der Pumpe 3. Ausgehend vom Druckabgang 8 strömt der Großteil des Löschmittels in Richtung Löschmittelableitung 6 und in weiterer Folge zu einem oder mehreren nicht gezeigten Strahlrohr bzw. Schaumrohr.

Während dieses Strömungsvorganges des Löschmittels in Richtung Löschmittelableitung 6 passiert das Löschmittel einen Steuerkegel 9. Das Steuerelement 9 ist vorzugsweise ein stumpfkegelig ausgeführtes Element, welches an einem zumindest teilweise als zylindrische Bohrung ausgeführten Steuerelementsitz 10 anliegt. Der Steuerelementsitz 10 befindet sich an der von der Pumpe 3 abgewandten Seite des Druckabganges 8. Zur Führung das Steuerelementes 9 ist dieses fest mit einer Steuerstange 11 verbunden.

Vorzugsweise wird diese Verbindung zwischen Steuerelement 9 und Steuerstange 11 als lösbare Verbindung mittels eines Befestigungselementes 12 ausgeführt. Dies ist besonders vorteilhaft, wenn die Durchflussmengenmesseinrichtung 1 gewartet werden muss und für diese Wartungszwecke zerlegt werden muss.

Alternativ dazu kann vorgesehen sein, dass anstatt einer Verbindung mittels eines Befestigungselementes 12 eine stoffliche Verbindung zwischen Steuerelement 9 und Steuerstange 11 hergestellt wird. Dies kann beispielsweise durch eine Schweißverbindung oder eine Hartlötverbindung realisiert werden.

In einer weiteren Alternative kann vorgesehen sein, dass das Steuerelement 9 mittels eines Gewindes an der Steuerstange 11 befestigt ist.

In einer weiteren Alternative ist es auch möglich, dass das Steuerelement 9 und die Steuerstange 11 einteilig gegossen werden, oder durch mechanische Fertigung aus einem Gussstück erzeugt werden.

Durch ein Federelement 13 wird das Steuerelement 9 auf den Steuerelementsitz 10 gedrückt, sodass sich eine Kontaktfläche 14 zwischen Steuerkegel 9 und Steuerelementsitz 10 ergibt.

Durch den Steuerkegel 9 wird der Druckabgang 8 zur Löschmittelableitung 6 separiert. Wird nun Löschmittel durch die Pumpe 3 gefördert, so erhöht sich der Druck am Druckabgang 8 der Pumpe 3. Durch diesen erhöhten Druck gegenüber der Löschmittelableitung 6 wird das Steuerelement 9 vom durchströmenden Löschmittel in Richtung Strömungsrichtung - Pfeil 15 - bewegt. Hierbei wird das Steuerelement 9 von seinem Steuerelementsitz 10 abgehoben, sodass sich ein ringförmiger Querschnitt ergibt, durch welchen ringförmigen Querschnitt das Löschmittel in Richtung Löschmittelableitung 6 fließen kann.

Der genaue Zusammenhang zwischen Löschmitteldurchflussmenge und Bewegung des Steuerelementes 9, beziehungsweise die erfindungsgemäße Ausgestaltung des Steuerelementes 9 wird in weiterer Folge noch genauer erklärt.

Bei einer Erhöhung des Löschmittelvolumenstromes wird das Steuerelement 9 immer mehr in Richtung der Strömungsrichtung - Pfeil 15 - gedrückt, wodurch auch die Steuerstange 11 weiter in Richtung des Pfeils 15 bewegt wird. Bei Verringerung des Volumenstromes wird das Steuerelement 9 vom Federelement 13 entgegen der Strömungsrichtung 15 in Richtung zum Steuerelementsitz 10 zurückgedrückt. Die Positionierung des Steuerelementes 9 und somit der Steuerstange 11 relativ zum Pumpengehäuse bzw. relativ zur Dosiervorrichtung 7 steht also in direktem Zusammenhang mit der Löschmitteldurchflussmenge. Die Steuerstange 11 stellt eine direkte Verbindung mit der Dosiervorrichtung 7 her, mit welcher das Zusatzmittel zum Zumischen zum Brauch- oder Frischwasser dosiert wird.

Das Zusatzmittel wird hierbei über eine Zusatzmittelzuleitung 5 der Dosiervorrichtung 7 zugeführt. In der Dosiervorrichtung 7 wird die Zusatzmittelmenge entsprechend eines gewünschten prozentualen Anteils von Zusatzmittel am Löschmittel bzw. entsprechend der aktuell geförderten Löschmittelmenge dosiert.

Das in benötigter bzw. gewünschter Menge dosierte Zusatzmittel gelangt nach dem Austritt aus der Dosiervorrichtung 7 in ein Verbindungsrohr 16. Ausgehend vom Verbindungsrohr 16 gelangt das Zusatzmittel in eine Wasserstrahlpumpe 17, welche den nötigen Unterdruck erzeugt, um das Zusatzmittel über die Zusatzmittelzuleitung 5 in die Dosiervorrichtung 7 und das Verbindungsrohr 16 zu saugen.

Die Funktionsweise der Wasserstrahlpumpe ist entsprechend einem Venturirohr, wobei die Wasserstrahlpumpe wie folgt funktioniert. Löschmittel wird vom Druckabgang 8 mittels eines Druckrohrabzweigers 18 abgezweigt und gelangt in eine Treibdüse 19 der Wasserstrahlpumpe 17. Die im Druckrohrabzweiger 18 abgezweigte Löschmittelmenge ist dabei weitaus geringer als die in Richtung der Löschmittelableitung 6 geförderte Löschmittelmenge. Da sich beide Ableitungen am Druckabgang 8 befinden, ist das Druckniveau des Mediums im Druckrohrabzweiger 18 und in der Löschmittelableitung 6 ungefähr gleich groß. Somit ist auch der Druck in der Treibdüse 19 der Wasserstrahlpumpe 17 in etwa auf das Druckniveau der Löschmittelableitung 6 gebracht.

Das mit Druck beaufschlagte Löschmittel wird nun über die Treibdüse 19 in einen Saugraum 20 der Wasserstrahlpumpe 17 eingespritzt. Durch dieses druckbehaftete Einspritzen des über den Druckrohrabzweiger 18 geführten Löschmittels in den Saugraum 20 ergibt sich im Saugraum 20 durch den Ventouri-Effekt ein definierter Unterdruck.

Der Saugraum 20 steht in direkter Verbindung mit dem Verbindungsrohr 16. Somit wird durch den sich ergebenden Unterdruck das Zusatzmittel aus dem Verbindungsrohr 16 in den Saugraum 20 gesaugt. Im Saugraum 20 trifft es auf den durch die Treibdüse 19 mit Druck eingebrachten Löschmittelstrahl, wodurch er sich mit diesem vermischt. Das hierbei entstehende Zusatzmittelgemisch gelangt nun über ein weiteres Verbindungsrohr 21 in die Wasserzuleitung 4. Hierbei wird das Zusatzmittelgemisch mit dem Frischwasser vermischt und gelangt anschließend in den saugseitigen Eingang der Pumpe 3.

Die Durchflussmengenmesseinrichtung 1 kann theoretisch auch so angeordnet sein, dass sie beispielsweise in der Wasserzuleitung 4 den Strom der zugeführten Wassermenge an Frischwasser oder Brauchwasser misst. Weiters kann auch vorgesehen sein, dass mit dem Steuerelement nur die Durchflussmenge gemessen und elektronisch abgegriffen wird. Eine weitere Elektronik kann dann für die Steuerung diverser Dosiereinrichtungen sorgen.

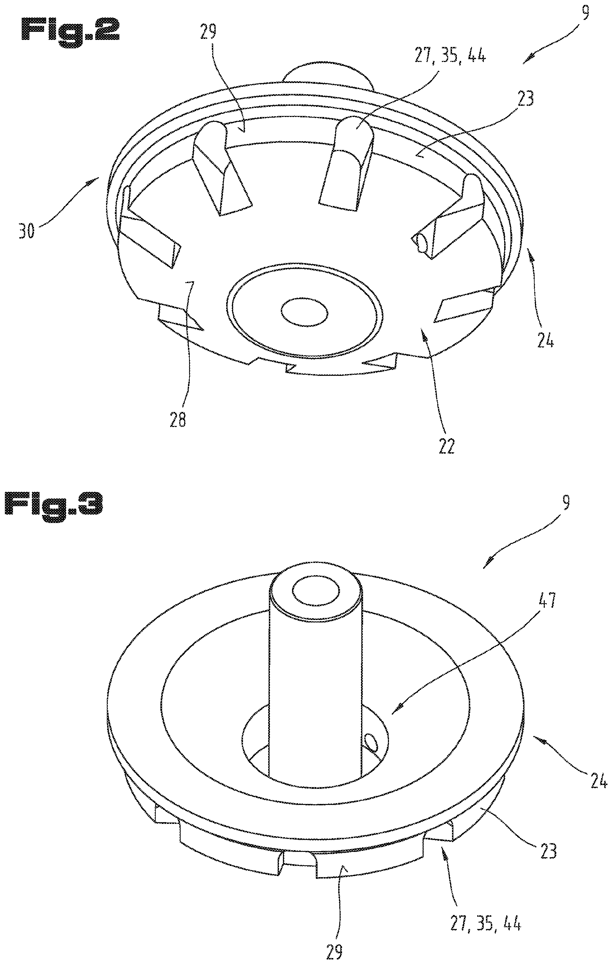

Die Fig. 2 bis Fig. 5 zeigen verschiedene Ansichten von Steuerelementen 9.

Fig. 2 zeigt eine perspektivische Ansicht von schräg unten auf ein Steuerelement 9. Das Steuerelement 9 umfasst einen kegelförmigen Abschnitt 22 sowie einen zylinderförmigen Teilabschnitt 23. Vorzugsweise ist der zylinderförmige Teilabschnitt 23 direkt an den kegelförmigen Abschnitt 22 angeschlossen. Jedoch ist auch denkbar, dass zwischen diesen beiden Abschnitt 22, 23 ein weiterer beliebig ausgestalteter Zwischenabschnitt eingefügt ist. Weiters kann vorgesehen sein, dass ein Kopfabschnitt 24 ausgebildet ist, welcher gegenüber dem zylinderförmigen Teilabschnitt 23 radial vorsteht.

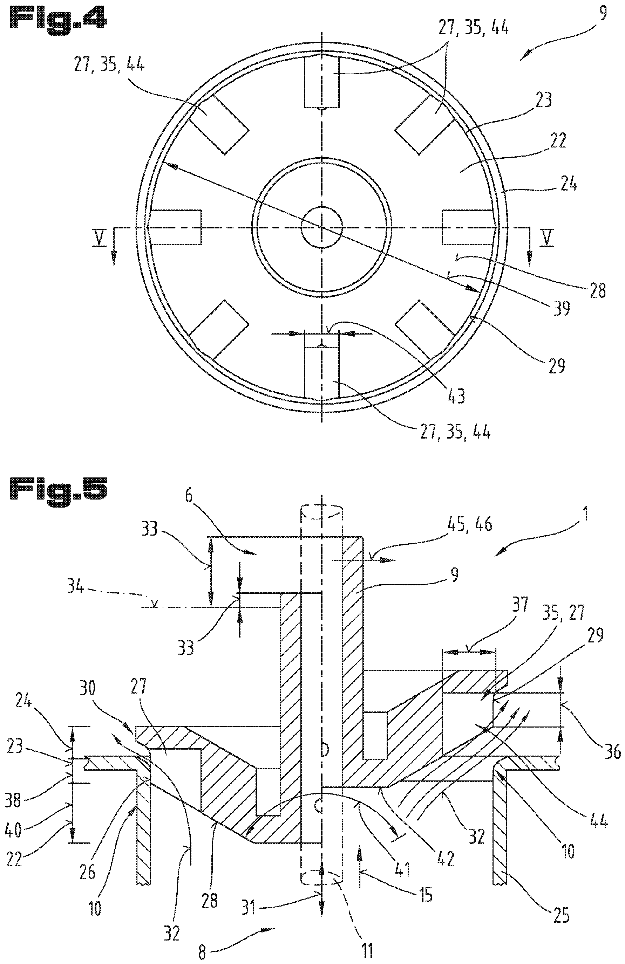

In Fig. 5 ist die Funktionsweise des Steuerelementes 9 gut ersichtlich. Fig. 5 zeigt hierbei einen Vertikalschnitt durch das Steuerelement 9, insbesondere entlang der Schnittlinien V - V aus Fig. 4. Hierbei ist auch ein Gehäuse 25 schematisch dargestellt, in welchem das Steuerelement 9 aufgenommen ist. Dabei ist gut ersichtlich, dass das Steuerelement 9, insbesondere ein zylinderförmigen Teilabschnitt 23 des Steuerelementes 9 in das Gehäuse 25 eingeschoben werden kann.

Durch Einschieben des Steuerelementes 9 in das Gehäuse 25 ergibt sich ein Kontaktabschnitt 26. Dieser Kontaktabschnitt 26 wird dadurch gebildet, dass das Steuerelement 9, insbesondere der zylinderförmige Teilabschnitt 23 des Steuerelementes 9 eng anliegend im Gehäuse 25 aufgenommen ist. Hierbei ist es zu bevorzugen, dass die Kontur des Gehäuses 25 an die Außenkontur des zylinderförmigen Teilabschnittes 23 angepasst ist. Um die Funktionalität der Durchflussmengenmesseinrichtung 1 zu gewährleisten, erscheint es als sinnvoll, wenn für den Kontaktabschnitt 26 eine Spielpassung gewählt wird, sodass sichergestellt ist, dass das Steuerelement 9 sich nicht im Gehäuse 25 verklemmen oder festsetzen kann.

Bei der geometrischen Form des zylinderförmigen Teilabschnittes 23 bzw. des diesen umgebenden Gehäuses 25 hat es sich aus fertigungstechnischer Sicht als vorteilhaft erwiesen, wenn der zylinderförmige Teilabschnitt 23 als Kreiszylinder ausgeführt wird. Es ist jedoch auch denkbar, dass der zylinderförmige Teilabschnitt 23 als Zylinder mit polygonaler, insbesondere rechteckiger oder quadratischer Grundfläche ausgeführt wird.

Weiters ist in Fig. 5 gut ersichtlich, dass eine Ausnehmung 27 vorgesehen ist, welche die Mantelfläche 28 des kegelförmigen Abschnittes 22 und die Mantelfläche 29 des zylinderförmigen Teilabschnittes 23 unterbricht. Um die Funktion des Steuerelementes 9 erklären zu können, ist dies in Fig. 5 in zwei verschiedenen Stellungen dargestellt. In einer komplett geschlossenen Stellung des Steuerelementes 9, wie sie in Fig. 1 dargestellt ist, fließt kein Wasser durch die Durchflussmengenmesseinrichtung 1, wodurch der Ausschlag des Steuerelementes 9 bzw. der damit verbundenen Steuerstange 11 gleich Null ist.

Der linke Abschnitt von Fig. 5 zeigt eine Stellung des Steuerelementes 9 welches geringfügig in Strömungsrichtung 15 verschoben ist. Die Strömungsrichtung 15 verläuft hierbei parallel zu einer Achsrichtung 31, welche durch die Mittellinie der Steuerstange 11 definiert ist.

Die Verschiebung des Steuerelementes 9 resultiert daraus, dass vom Druckabgang 8 der Pumpe 3 Wasser bzw. Löschmittel in Richtung der Löschmittelableitung 6 gedrückt wird. Durch diesen Druckaufbau wird das Steuerelement 9 mitsamt Steuerstange 11 entgegen der Federkraft des Federelementes 13 in Strömungsrichtung 15 verschoben. Ist nun das Steuerelement 9 leicht angehoben, so kann das Löschmittel dem Strömungspfeil 32 folgend durch die Ausnehmung 27 strömen.

Die Stellung des Steuerelementes 9 ist hierbei wesentlich davon abhängig, wie viel Löschmittel durch die Durchflussmengenmesseinrichtung 1 strömt.

Als Maß für die Stellung des Steuerelementes 9 wird der Hub 33 eingeführt. Dieses Maß definiert den Ausschlag oder auch Steuerausschlag des Steuerelementes 9, ausgehend von einer Nullstellung 34 in Richtung Strömungsrichtung 15.

Bei der im linken Abschnitt der in Fig. 5 dargestellten Ansicht ist der Hub 33 nicht nur abhängig von der Löschmittelmenge, welche durch die Durchflussmengenmesseinrichtung 1 fließt, sondern auch von der Größe bzw. Form und Anzahl der Ausnehmungen 27, welche am Steuerelement 9 angeordnet sind. Sind am Steuerelement 9 mehr bzw. größere Ausnehmungen 27 angeordnet, so verringert sich bei gleicher Durchflussmenge der Hub 33. Dies resultiert daraus, dass die Strömungsgeschwindigkeit des Löschmittels annähernd gleich bleibt. Wird also die frei durchströmbare Fläche durch Umgestaltung der Ausnehmungen 27 etwa dadurch verdoppelt, dass eine doppelte Anzahl von Ausnehmungen 27 vorgesehen ist, so kann bei gleichem Volumenstrom mit gleicher Strömungsgeschwindigkeit der halbe Hub 33 genügen, um die Löschmittelmenge durch die Durchflussmengenmesseinrichtung 1 durchströmen zu lassen.

Dadurch dass auf den gesamten Umfang des Steuerelementes 9 gesehen die Fläche der Ausnehmungen 27 im Vergleich zum Umfang des zylinderförmigen Teilabschnittes 23 eher gering ist, reagiert das Steuerelement 9 auf eine Veränderung der Durchflussmenge des Löschmittels mit einem vergleichsweise großen Steuerausschlag bzw. Veränderung des Hubes 33. Mit anderen Worten ausgedrückt, eine geringe Veränderung des Volumenstromes hat einen großen Steuerausschlag, bzw. Veränderung des Hubes 33 zur Folge.

Anders verhält es sich bei einer Stellung des Steuerelementes 9, wie es im rechten Abschnitt von Fig. 5 dargestellt ist. Hierbei ist das Steuerelement 9 bedingt durch eine große Löschmitteldurchflussmenge soweit vom Steuerelementsitz 10 abgehoben, dass nicht nur die Ausnehmungen 27 vom Löschmittel durchströmt werden, sondern dass das Steuerelement 9 vollumfänglich vom Löschmittel umströmt wird, wodurch sich ein ringförmiger Querschnitt ergibt, welcher vom Löschmittel durchströmt wird.

Durch die vollumfängliche Umströmung ergibt sich eine große Durchströmfläche, wobei eine Änderung der Durchflussmenge bei einer derartigen Stellung des Steuerelementes, nur eine vergleichsweise geringe Änderung des Hubes 33 mit sich zieht.

Der Übergang zwischen Durchströmung allein durch die Ausnehmungen 27 und vollumfängliche Umströmung des Steuerelementes 9 findet ab jenem Hub 33 statt, bei dem der zylinderförmige Teilabschnitt 23 des Steuerelementes 9 vom Kontaktabschnitt 26 des Steuerelementsitzes 10 im Gehäuse 25 abgehoben wird und diese voneinander beabstandet werden.

Die Ausnehmung 27 ist als eine zur Achsrichtung 31 der Steuerstange 11 parallel verlaufende Tasche 35 ausgeführt. Eine derartige Tasche 35 kann beispielsweise mit einem Fingerfräser hergestellt werden. Um eine optimale Strömung zu erreichen, erscheint es als sinnvoll, wenn eine axiale Erstreckung 36 der Ausnehmung 27 gleich groß gewählt wird wie eine radiale Erstreckung 37. Durch diese Abmaße wird die Ausdehnung der Ausnehmung 27 bzw. der Tasche 35 definiert.

Weiters kann es vorteilhaft für den Verlauf der Strömung sein, wenn die Längsausdehnung 38 des zylinderförmigen Teilabschnittes 23 zwischen 5 % und 20 % der Querausdehnung 39 des zylinderförmigen Teilabschnittes 23 beträgt.

Weiters kann vorgesehen sein, dass die Längsausdehnung 40 des kegelförmigen Abschnittes 22 zwischen 100 % und 200 % der Längsausdehnung 38 des zylinderförmigen Teilabschnittes 23 beträgt. Daraus ergibt sich ein Öffnungswinkel 41 des kegelförmigen Abschnittes 22 welcher zwischen 70 und 130° beträgt.

Diese genannten Dimensionierungswerte stellen vorteilhafte Werte dar, bei welchen die Strömungsverluste durch beispielsweise Verwirbelungen möglichst gering gehalten werden. Um etwa Fertigungskosten einzusparen, ist es auch denkbar, dass beispielsweise der kegelförmige Abschnitt 22 des Steuerelementes 9 so klein gestaltet wird, dass die Längsausdehnung 40 des kegelförmigen Abschnittes 22 nur noch 0,5 bis 1 mm beträgt. Hierbei ist der kegelförmige Abschnitt 22 nur als Anfasung ausgebildet, um das Einführen des zylinderförmigen Teilabschnitt 23 in den Steuerelementsitz 10 möglichst zu erleichtern.

Bei einer derartigen Ausführung würde sich eine Stirnfläche 42, welche den kegelförmigen Abschnitt 22 begrenzt, nahezu über die gesamte Querausdehnung 39 des zylinderförmigen Teilabschnittes 23 erstrecken. Hierbei ist zu erwarten, dass im Bereich der Stirnfläche 42 Verwirbelungen in der Strömung auftreten, welche die Charakteristik der Durchflussmengenmesseinrichtung 1 negativ beeinflussen.

Bei der Dimensionierung des Steuerelement 9 wird es weiters als vorteilhaft gesehen, wenn, wie in Fig. 4 ersichtlich, eine Breite 43 einer Ausnehmung 27 bzw. Tasche 35 so groß gestaltet wird, dass alle Ausnehmungen 27 zusammen in Summe zwischen 5 % und 60 % der abgewickelten Länge oder auch Umfang des zylinderförmigen Teilabschnittes 23 am Steuerelement 9 einnehmen.

Weiters sollte die Ausnehmung 27 so ausgeführt sein, dass sie einen Verbindungskanal 44 zwischen dem kegelförmigen Abschnitt 22 und dem zylinderförmigen Teilabschnitt 23 des Steuerelementes 9 ausbildet. Dieser Verbindungskanal 44 ist vorzugsweise so ausgebildet, dass er radial 45 auf die von der Steuerstange 11 abgewendete Seite 46 offen ist.

Alternativ dazu kann vorgesehen sein, dass der Verbindungskanal 44 als Bohrung ausgebildet ist, welche beispielsweise aus zwei aufeinander treffenden Bohrungen besteht. Hierbei kann eine erste Bohrung in Achsrichtung 31 durch die Mantelfläche 28 des kegelförmigen Abschnittes 22 eingebracht werden. Eine weitere Bohrung kann radialer Richtung 45 durch die Mantelfläche 29 des zylinderförmigen Teilabschnittes 23 eingebracht werden. Wenn sich diese beiden Bohrungen innerhalb des Steuerelementes 9 überschneiden, so ergibt sich ein geschlossener Strömungskanal.

Um am Steuerelement 9 Gewicht einzusparen, kann wie in Fig. 3 ersichtlich vorgesehen sein, dass an einer in Strömungsrichtung 15 gesehen abgewandten Seite des Steuerelementes 9 eine Aussparung 47 vorgesehen ist.

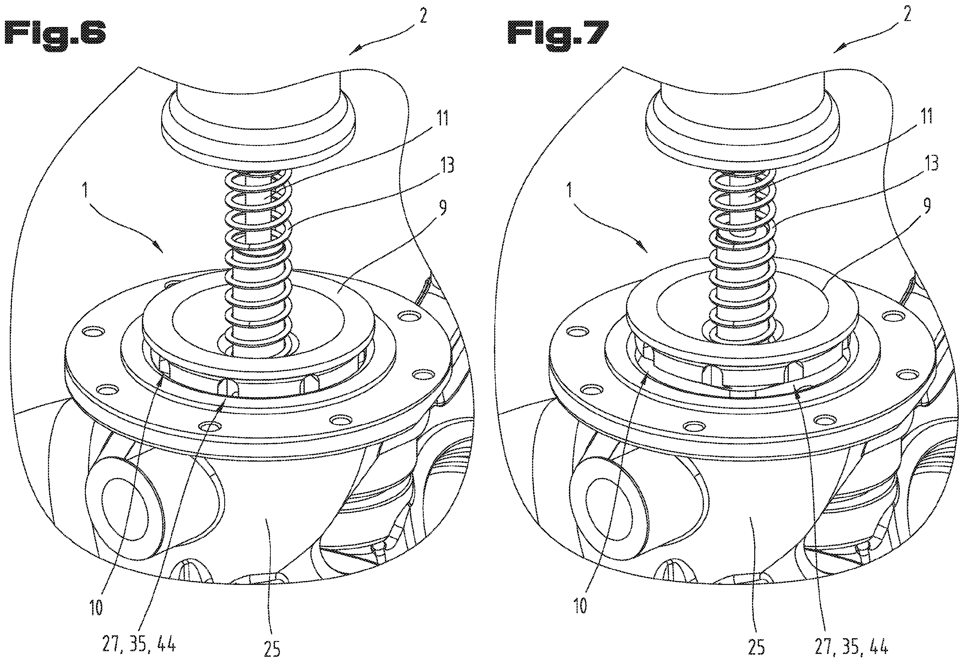

Die Fig. 6 und 7 zeigen in einer perspektivischen Ansicht ein Steuerelement 9 welches mit einer Steuerstange 11 verbunden ist und durch ein Federelement 13 an den Steuerelementsitz 10 gedrückt wird. Hierbei wird das Steuerelement 9 am Gehäuse 25 aufgenommen.

In Fig. 6 ist eine Stellung des Steuerelementes 9 dargestellt, in welcher dieses durch die vorliegende Löschmitteldurchflussmenge einen geringfügigen Steuerausschlag bzw. Hub 33 aufweist, sodass die Flüssigkeit nur durch die am Steuerelement 9 umlaufend verteilten Ausnehmungen 27 strömt.

Im Gegensatz dazu ist gut ersichtlich, wie in Fig. 7 das Steuerelement 9 einen so großen Steuerausschlag bzw. Hub 33 aufweist, dass sich ein umlaufender ringförmiger Querschnitt ergibt, durch welchen das Löschmittel strömt.

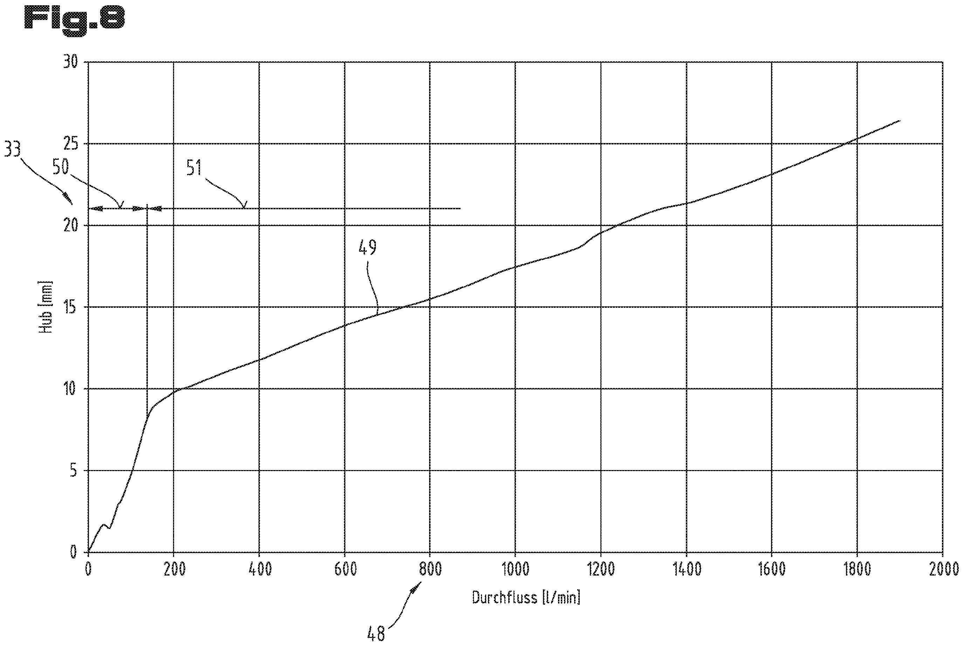

In Fig. 8 ist in einem Diagramm der Zusammenhang zwischen Hub 33 und der Durchflussmenge 48 dargestellt. Im vorliegenden Diagramm ist der Hub 33 auf der Ordinatenachse aufgetragen und die Durchflussmenge 48 auf der Abszissenachse. Im Diagramm ist gut ersichtlich, dass sich die aus dem Zusammenhang von Hub 33 und Durchflussmenge 48 ergebende Regellinie 49 im Wesentlichen in einen ersten Abschnitt 50 und in einen zweiten Abschnitt 51 aufteilt.

Der erste Abschnitt 50 der Regellinie 49 repräsentiert jenen Zustand, in welchem sich der zylinderförmige Teilabschnitt 23 innerhalb des Steuerelementsitzes 10 im Gehäuse 25 befindet. In diesem ersten Abschnitt 50 wird wie in Fig. 6 ersichtlich jener Bereich dargestellt, in welchem das Fluid ausschließlich durch die Ausnehmungen 27 strömt. Wie im Diagramm ersichtlich, ergibt sich hierbei eine Regellinie 49 mit großer Steigung, da eine vergleichsweise geringe Änderung der Durchflussmenge zu einem vergleichsweise großen Steuerausschlag bzw. Veränderung des Hubes 33 des Steuerelementes 9 führt.

Der zweite Abschnitt 51 repräsentiert jenen Zustand, in welchem das Steuerelement 9, wie in Fig. 7 ersichtlich, bereits so weit aus dem Gehäuse 25 gehoben ist, sodass das Steuerelement 9 vollumfänglich vom Fluid umströmt wird. Dadurch ergibt sich im zweiten Abschnitt 51 der Regellinie 49 eine geringere Steigung, da eine vergleichsweise große Änderung der Durchflussmenge zu einem vergleichsweise geringen Steuerausschlag bzw. Veränderung des Hubes 33 des Steuerelementes 9 führt.

Die Ausführungsbeispiele zeigen mögliche Ausführungsvarianten der der Durchflussmengenmesseinrichtung 1, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Vor allem können die einzelnen in den Fig. 1, 2 bis 4, 5, 6 und 7 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

Der Ordnung halber sei abschließend darauf hingewiesen, dass zum besseren Verständnis des Aufbaus der Durchflussmengenmesseinrichtung 1 diese bzw. deren Bestandteile teilweise unmaßstäblich und/oder vergrößert und/oder verkleinert dargestellt wurden.

**Bezugszeichenaufstellung**

| | | | |
|---|---|---|---|
| 1 | Durchflussmengenmesseinrichtung | 31 | Achsrichtung |
| 2 | Feuerlöschvorrichtung | 32 | Strömungspfeil |
| 3 | Pumpe | 33 | Hub |
| 4 | Wasserzuleitung | 34 | Nullstellung |
| 5 | Zusatzmittelzuleitung | 35 | Tasche |
| 6 | Löschmittelableitung | 36 | axiale Erstreckung |
| 7 | Dosiervorrichtung | 37 | radiale Erstreckung |
| 8 | Druckabgang | 38 | Längsausdehnung |
| 9 | Steuerelement | 39 | Querausdehnung |
| 10 | Steuerelementsitz | 40 | Längsausdehnung |
| 11 | Steuerstange | 41 | Öffnungswinkel |
| 12 | Befestigungselement | 42 | Stirnfläche |
| 13 | Federelement | 43 | Breite |
| 14 | Kontaktfläche | 44 | Verbindungskanal |
| 15 | Strömungsrichtung | 45 | radial |
| 16 | Verbindungsrohr | 46 | abgewendete Seite |
| 17 | Wasserstrahlpumpe | 47 | Aussparung |
| 18 | Druckrohrabzweiger | 48 | Durchflussmenge |
| 19 | Treibdüse | 49 | Regellinie |
| 20 | Saugraum | 50 | erster Abschnitt |
| 21 | weiteres Verbindungsrohr | 51 | zweiter Abschnitt |
| 22 | kegelförmiger Abschnitt | | |
| 23 | zylinderförmiger Teilabschnitt | | |
| 24 | Kopfabschnitt | | |
| 25 | Gehäuse | | |
| 26 | Kontaktabschnitt | | |
| 27 | Ausnehmung | | |
| 28 | Mantelfläche | | |
| 29 | Mantelfläche | | |
| 30 | Vorsprung | | |

## Patentansprüche

1. Durchflussmengenmesseinrichtung (1) für eine Feuerlöschvorrichtung (2) zum Erfassen der Durchflussmenge an Löschmittel oder Frischwasser, umfassend ein auf einer Steuerstange (11) angeordnetes Steuerelement (9), welches Steuerelement (9) einen im Wesentlichen kegelförmigen Abschnitt (22) aufweist, und ein das Steuerelement (9) umgebendes Gehäuse (25), welches Gehäuse (25) zumindest in einem Kontaktabschnitt (26) mit dem Steuerelement (9) einen hohlzylindrischen Steuerelementsitz (10) aufweist, wobei das Steuerelement (9) in Achsrichtung (31) der Steuerstange (11) verschiebbar im Gehäuse (25) aufgenommen ist, wobei die Stellung des Steuerelementes (9) wesentlich davon abhängig ist, wie viel Löschmittel durch die Durchflussmengenmesseinrichtung (1) strömt, **dadurch gekennzeichnet, dass** das Steuerelement (9) weiters einen zylinderförmigen Teilabschnitt (23) aufweist, welcher in Strömungsrichtung (15) des zu messenden Fluids gesehen dem kegelförmigen Abschnitt (22) nachgeordnet ist, und welcher zylinderförmige Teilabschnitt (23) in seiner Querschnittskontur an den hohlzylindrischen Steuerelementsitz (10) angepasst ist, sodass der zylinderförmige Teilabschnitt (23) des Steuerelements (9) im Wesentlichen spaltfrei in den hohlzylindrischen Steuerelementsitz (10) einschiebbar ist, und in welchem zylinderförmigen Teilabschnitt (23) des Steuerelements (9) weiters zumindest eine Ausnehmung (27) vorgesehen ist, welche die Mantelflächen (28, 29) des kegelförmigen Abschnittes (22) und des zylinderförmigen Teilabschnittes (23) des Steuerelements (9) unterbricht.

2. Durchflussmengenmesseinrichtung nach Anspruch 1, **dadurch gekennzeichnet, dass** die zumindest eine Ausnehmung (27) als eine zur Achsrichtung (31) der Steuerstange (11) parallel verlaufende Tasche (35) ausgeführt ist.

3. Durchflussmengenmesseinrichtung nach Anspruch 1 oder 2, **dadurch gekennzeichnet, dass** zumindest zwei diametral gegenüberliegende Ausnehmungen (27) vorgesehen sind.

4. Durchflussmengenmesseinrichtung nach einem der vorhergehenden Ansprüche, **dadurch gekennzeichnet, dass** der zylinderförmige Teilabschnitt (23) direkt an den kegelförmigen Abschnitt (22) anschließt.

5. Durchflussmengenmesseinrichtung nach einem der vorhergehenden Ansprüche, **dadurch gekennzeichnet, dass** am Steuerelement (9) anschließend an den zylinderförmigen Teilabschnitt (23) ein Kopfabschnitt (24) in Form einer Erweiterung ausgebildet ist, durch welchen Kopfabschnitt (24) die Einschiebbarkeit des Steuerelements (9) in den Steuerelementsitz (10) begrenzt ist.

6. Durchflussmengenmesseinrichtung nach einem der vorhergehenden Ansprüche, **dadurch gekennzeichnet, dass** die Längsausdehnung (38) des zylinderförmigen Teilabschnittes (23) des Steuerelements (9) zwischen 5% und 20% der Querausdehnung (39) des zylinderförmigen Teilabschnittes (23) des Steuerelements (9) beträgt.

7. Durchflussmengenmesseinrichtung nach einem der vorhergehenden Ansprüche, **dadurch gekennzeichnet, dass** die Längsausdehnung (40) des kegelförmigen Abschnittes (22) des Steuerelements (9) zwischen 100% und 200% der Längsausdehnung (38) des zylinderförmigen Teilabschnittes (23) beträgt.

8. Durchflussmengenmesseinrichtung nach einem der vorhergehenden Ansprüche, **dadurch gekennzeichnet, dass** das Steuerelement (9) mittels einem Befestigungselement (12) mit der Steuerstange (11) verbunden ist.

9. Durchflussmengenmesseinrichtung nach einem der vorhergehenden Ansprüche, **dadurch gekennzeichnet, dass** der Öffnungswinkel (41) des kegelförmigen Abschnittes (22) zwischen 70° und 130° beträgt.

10. Durchflussmengenmesseinrichtung nach einem der vorhergehenden Ansprüche, **dadurch gekennzeichnet, dass** die Ausnehmungen (27) zwischen 5% und 60% der abgewickelten Länge des zylinderförmigen Teilabschnittes (23) am Steuerelement (9) einnehmen.

11. Durchflussmengenmesseinrichtung nach einem der vorhergehenden Ansprüche, **dadurch gekennzeichnet, dass** eine axiale Erstreckung (36) einer Ausnehmung (27) im zylinderförmigen Teilabschnitt (23) in etwa gleich groß ist wie eine radiale Erstreckung (37) dieser Ausnehmung (27).

12. Durchflussmengenmesseinrichtung nach einem der vorhergehenden Ansprüche, **dadurch gekennzeichnet, dass** die wenigstens eine Ausnehmung (27) einen Verbindungskanal (44) zwischen dem kegelförmigen Abschnitt (22) und dem zylinderförmigen Teilabschnitt (23) des Steuerelements (9) ausbildet.

13. Durchflussmengenmesseinrichtung nach Anspruch 12, **dadurch gekennzeichnet, dass** der Verbindungskanal (44) radial (45) auf die von der Steuerstange (11) abgewendete Seite (46) offen ausgebildet ist.

14. Durchflussmengenmesseinrichtung nach einem der vorhergehenden Ansprüche, **dadurch gekennzeichnet, dass** die wenigstens eine Ausnehmung (27) einen Verbindungskanal (44) ausbildet, welcher radial (45) und axial (31) zum Steuerelement (9) verlaufende Abschnitte aufweist.

15. Feuerlöschvorrichtung (2) umfassend eine Wasserzuleitung (4), eine Zusatzmittelzuleitung (5), eine Löschmittelableitung (6), eine Pumpe, eine Zusatzmitteldosiervorrichtung (7) und eine Durchflussmengenmesseinrichtung (1), welche die Zusatzmitteldosiervorrichtung (7) steuert, **dadurch gekennzeichnet, dass** die Durchflussmengenmesseinrichtung (1) nach einem oder mehreren der vorhergehenden Ansprüche ausgebildet ist.

## Claims

1. A flow rate measurement device (1) for a fire extinguishing apparatus (2) for detecting the flow rate of extinguishing agent or fresh water, comprising a control element (9) arranged on a control rod (11), which control element (9) has a substantially conical section (22), and a housing (25) surrounding the control element (9), which housing (25) comprises a hollow cylindrical control element seat (10) at least in a contact section (26) with the control element (9), wherein the control element (9) is received in the housing (25) so as to be displaceable in the axial direction (31) of the control rod (11), wherein the position of the control element (9) essentially depends on how much extinguishing agent is flowing through the flow rate measurement device (1), **characterized in that** the control element (9) further comprises a cylindrical subsection (23) which is positioned downstream of the conical section (22) as viewed in the flow direction (15) of the fluid to be measured, and which cylindrical subsection (23) is adapted in terms of its cross-sectional contour to the hollow cylindrical control element seat (10) so that the cylindrical subsection (23) of the control element (9) can be pushed into the hollow cylindrical control element seat (10) substantially without a gap, and in which cylindrical subsection (23) of the control element (9) further at least one recess (27) is provided, which interrupts the shell surfaces (28, 29) of the conical section (22) and of the cylindrical subsection (23) of the control element (9).

2. The flow rate measurement device according to claim 1, **characterized in that** the at least one recess (27) is provided in the form of a pocket (35) extending parallel with the axial direction (31) of the control rod (11).

3. The flow rate measurement device according to claim 1 or 2, **characterized in that** at least two diametrically opposite recesses (27) are provided.

4. The flow rate measurement device according to one of the preceding claims, **characterized in that** the cylindrical subsection (23) directly adjoins the conical section (22).

5. The flow rate measurement device according to one of the preceding claims, **characterized in that** the control element (9) is provided with a head section (24) adjoining the cylindrical subsection (23) in the form of a wider region, by means of which head section (24) the degree to which the control element (9) can be pushed into the control element seat (10) is restricted.

6. The flow rate measurement device according to one of the preceding claims, **characterized in that** the longitudinal extension (38) of the cylindrical subsection (23) of the control element (9) is between 5% and 20% of the transverse extension (39) of the cylindrical subsection (23) of the control element (9).

7. The flow rate measurement device according to one of the preceding claims, **characterized in that** the longitudinal extension (40) of the conical section (22) of the control element (9) is between 100% and 200% of the longitudinal extension (38) of the cylindrical subsection (23).

8. The flow rate measurement device according to one of the preceding claims, **characterized in that** the control element (9) is connected to the control rod (11) by means of a fixing element (12).

9. The flow rate measurement device according to one of the preceding claims, **characterized in that** the opening angle (41) of the conical section (22) is between 70° and 130°.

10. The flow rate measurement device according to one of the preceding claims, **characterized in that** the recesses (27) occupy between 5% and 60% of the unwound length of the cylindrical subsection (23) on the control element (9).

11. The flow rate measurement device according to one of the preceding claims, **characterized in that** an axial extension (36) of a recess (27) in the cylindrical subsection (23) is more or less the same size as a radial extension (37) of this recess (27).

12. The flow rate measurement device according to one of the preceding claims, **characterized in that** the at least one recess (27) forms a connecting passage (44) between the conical section (22) and the cylindrical subsection (23) of the control element (9).

13. The flow rate measurement device according to claim 12, **characterized in that** the connecting passage (44) formed to be radially (45) open towards the side (46) facing away from the control rod (11).

14. The flow rate measurement device according to one of the preceding claims, **characterized in that** the at least one recess (27) forms a connecting passage (44) having sections extending radially (45) and axially (31) with respect to the control element (9).

15. A fire extinguishing apparatus (2) comprising a water intake line (4), an additive intake line (5), an extinguishing agent discharge line (6), a pump, an additive metering device (7) and a flow rate measurement device (1) which controls the additive metering device (7), **characterized in that** the flow rate measurement device (1) is designed according to one or more of the preceding claims.

## Revendications

1. Dispositif de mesure de débit (1) pour un dispositif d'extinction d'incendie (2) pour la mesure du débit de produit d'extinction ou d'eau fraîche, comprenant un élément de commande (9) disposé sur une tige de commande (11), cet élément de commande (9) comprenant une portion globalement conique (22), et un boîtier (25) entourant l'élément de commande (9), ce boîtier (25) comprenant, au moins dans une portion de contact (26) avec l'élément de commande (9), un siège d'élément de commande cylindrique creux (10), l'élément de commande (9) étant logé dans le boîtier (25) de manière coulissante dans la direction axiale (31) de la tige de commande (11), la position de l'élément de commande (9) dépendant globalement de la quantité de produit d'extinction qui traverse le dispositif de mesure de débit (1), **caractérisé en ce que** l'élément de commande (9) comprend en outre une partie cylindrique (23) qui est disposée, vue dans la direction d'écoulement (15) du fluide à mesurer, en aval de la portion conique (22) et cette partie cylindrique (23) présentant un contour de section transversale adapté au siège d'élément de commande cylindrique creux (10), de façon à ce que la partie cylindrique (23) de l'élément de commande (9) puisse être insérée globalement sans interstice dans le siège d'élément de commande cylindrique creux (10) et, dans cette partie cylindrique (23) de l'élément de commande (9), est prévue en outre au moins un évidement (27) qui interrompt les surfaces externes (28, 29) de la portion conique (22) et de la partie cylindrique (23) de l'élément de commande (9).

2. Dispositif de mesure de débit selon la revendication 1, **caractérisé en ce que** l'au moins un évidement (27) est réalisé comme une poche (35) s'étendant parallèlement à la direction axiale (31) de la tige de commande (11).

3. Dispositif de mesure de débit selon la revendication 1 ou 2, **caractérisé en ce qu'**au moins deux évidements (27) diamétralement opposés sont prévus.

4. Dispositif de mesure de débit selon l'une des revendications précédentes, **caractérisé en ce que** la partie cylindrique (23) se raccorde directement à la portion conique (22).

5. Dispositif de mesure de débit selon l'une des revendications précédentes, **caractérisé en ce que**, sur l'élément de commande (9), à la suite de la partie cylindrique (23), est formée une portion de tête (24) sous la forme d'un élargissement, cette portion de tête (24) permettant de limiter la capacité d'insertion de l'élément de commande (9) dans le siège d'élément de commande (10).

6. Dispositif de mesure de débit selon l'une des revendications précédentes, **caractérisé en ce que** l'extension longitudinale (38) de la partie cylindrique (23) de l'élément de commande (9) représente entre 5 % et 20 % de l'extension transversale (39) de la partie cylindrique (23) de l'élément de commande (9).

7. Dispositif de mesure de débit selon l'une des revendications précédentes, **caractérisé en ce que** l'extension longitudinale (40) de la portion conique (22) de l'élément de commande (9) représente entre 100 % et 200 % de l'extension longitudinale (38) de la partie cylindrique (23).

8. Dispositif de mesure de débit selon l'une des revendications précédentes, **caractérisé en ce que** l'élément de commande (9) est relié avec la tige de commande (11) au moyen d'un élément de fixation (12).

9. Dispositif de mesure de débit selon l'une des revendications précédentes, **caractérisé en ce que** l'angle d'ouverture (41) de la portion conique (22) est de 70° à 130°.

10. Dispositif de mesure de débit selon l'une des revendications précédentes, **caractérisé en ce que** les évidements (27) prennent entre 5 % et 60 % de la longueur déroulée de la partie cylindrique (23) sur l'élément de commande (9).

11. Dispositif de mesure de débit selon l'une des revendications précédentes, **caractérisé en ce qu'**une extension axiale (36) d'un évidement (27) dans la partie cylindrique (23) est approximativement égale à une extension radiale (37) de cet évidement (27).

12. Dispositif de mesure de débit selon l'une des revendications précédentes, **caractérisé en ce que** l'au moins un évidement (27) forme un canal de liaison (44) entre la portion conique (22) et la partie cylindrique (23) de l'élément de commande (9).

13. Dispositif de mesure de débit selon la revendication 12, **caractérisé en ce que** le canal de liaison (44) est conçu de manière ouverte radialement (45) sur le côté (46) opposé à la tige de commande (11).

14. Dispositif de mesure de débit selon l'une des revendications précédentes, **caractérisé en ce que** l'au moins un évidement (27) forme un canal de liaison (44) qui présente des portions s'étendant radialement (45) et axialement (31) par rapport à l'élément de commande (9).

15. Dispositif d'extinction d'incendies (2) comprenant une alimentation d'eau (4), une alimentation d'additif (5), une évacuation de produit d'extinction (6), une pompe, un dispositif de dosage d'additif (7) et un dispositif de mesure de débit (1) qui contrôle le dispositif de dosage d'additif (7), **caractérisé en ce que** le dispositif de mesure de débit (1) est conçu selon l'une ou plusieurs des revendications précédentes.
